# EUROPEAN PATENT APPLICATION

(11) **EP 4 787 941 A1**
(43) Date of publication of application: **05.08.2026**
(21) Application number: 23953587.5
(22) Date of filing: 27.09.2023
(51) Int. Cl.: H04W 24/10

(54) **DELAY STATUS REPORTING METHOD, TERMINAL, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Dehns Germany Partnerschaft mbB
(86) International application number: PCT/CN2023/122341
(87) International publication number: WO 2025/065435

(57) **Abstract**

Embodiments of the present disclosure provide a delay status reporting (DSR) method, a terminal, and a storage medium. The method is executed by the terminal. The method comprises : determining a first entity from a radio resource control (RLC) entity and/or a media access control (MAC) entity associated with a packet data convergence protocol (PDCP) entity, wherein the first entity comprises the RLC entity and/or the MAC entity; and the first entity is used for triggering DSR on the basis of remaining time. The present disclosure can implement a communication mechanism suitable for incorporating the DSR.

## Description

### TECHNICAL FIELD

The present disclosure relates to the field of communication technology, and in particular to a method for delay status reporting, a terminal, and a storage medium.

### BACKGROUND

In the field of communication technology, networks use Delay Status Reporting (DSR) mechanisms to obtain information about the status of data packets to be transmitted. Terminals report data transmission delay information to the network via DSR.

### SUMMARY

After the introduction of DSR, how to trigger DSR is a question that needs to be considered.

The embodiments of the present disclosure provide a method for delay status reporting, a terminal and a storage medium.

According to a first aspect of the embodiments of the present disclosure, there is provided a method for delay status reporting, performed by a terminal, including:
determining a first entity from a Radio Resource Control RLC entity and/or a Media Access Control MAC entity associated with a Packet Data Convergence Protocol PDCP entity;
where the first entity includes the RLC entity and/or the MAC entity; the first entity is configured to trigger delay status reporting (DSR) based on remaining time.

According to a second aspect of the embodiments of the present disclosure, there is provided a terminal, including:
a processing module configured to:
determine a first entity from a Radio Resource Control RLC entity and/or a Media Access Control MAC entity associated with a Packet Data Convergence Protocol PDCP entity;
where the first entity includes the RLC entity and/or the MAC entity; the first entity is configured to trigger Delay Status Reporting DSR based on remaining time.

According to a third aspect of the embodiments of the present disclosure, there is provided a terminal, including:
a memory comprising executable instructions;
one or more processors;
where, when the executable instructions are executed by the processor, the terminal is caused to perform the method according to the first aspect.

According to a fourth aspect of the embodiments of the present disclosure, there is provided a storage medium storing instructions that, when executed on a communication device, cause the communication device to perform the method according to the first aspect.

The technical solutions provided in the present disclosure can realize a communication mechanism adapted to the introduction of DSR.

It should be understood that the above general description and the following detailed description are exemplary and explanatory only, and do not limit the embodiments of the present disclosure.

### BRIEF DESCRIPTION OF THE DRAWINGS

The accompanying drawings, which are incorporated in and constitute a part of the description, illustrate embodiments of the present disclosure and, together with the description, serve to explain the principles of the embodiments of the present disclosure.
FIG. 1a is a schematic diagram of an architecture of a communication system according to an example embodiment;
FIG. 2a is a schematic flowchart of a method for delay status reporting according to an example embodiment;
FIG. 3a is a schematic flowchart of a method for delay status reporting according to an example embodiment;
FIG. 3b is a schematic flowchart of a method for delay status reporting according to an example embodiment;
FIG. 4a is a schematic flowchart of a method for delay status reporting according to an example embodiment;
FIG. 5a is a schematic flowchart of a method for delay status reporting according to an example embodiment;
FIG. 6a is a schematic structural diagram of a network device according to an example embodiment;
FIG. 6b is a schematic structural diagram of a terminal according to an example embodiment;
FIG. 7a is a schematic structural diagram of a UE according to an example embodiment;
FIG. 7b is a schematic structural diagram of a communication device according to an example embodiment.

### DETAILED DESCRIPTION

The embodiments of present disclosure provide a method for delay status reporting, a terminal, and a storage medium.

In a first aspect, the embodiments of the present disclosure provide a method for delay status reporting, performed by a terminal, including:
determining a first entity from a Radio Resource Control (RLC) entity and/or a Media Access Control (MAC) entity associated with a Packet Data Convergence Protocol (PDCP) entity, where the first entity includes an RLC entity and/or a MAC entity;
where the first entity is configured to trigger delay status reporting (DSR) based on remaining time.

In the above embodiment, the first entity can be determined from the RLC entity and/or MAC entity associated with the PDCP entity. Compared to the problem of an unclear first entity, this improves the DSR mechanism and makes the DSR mechanism more reliable.

In conjunction with the embodiment of the first aspect, in some embodiments, the PDCP entity is associated with a first type of RLC entity and/or a second type of RLC entity; the MAC entity associated with the PDCP includes a first type of MAC entity associated with the first type of RLC entity and/or a second type of MAC entity associated with the second type of RLC entity.

In the above embodiment, the PDCP entity can be associated with different types of RLC entities, and the PDCP entity can be associated with different types of MAC entities.

In conjunction with the embodiment of the first aspect, in some embodiments, determining the first entity from the Radio Resource Control (RLC) entity and/or Media Access Control (MAC) entity associated with the Packet Data Convergence Protocol (PDCP) entity includes one of:
determining the first entity from the RLC entity and/or MAC entity associated with the PDCP entity based on a protocol rule or a network configuration.

In the above embodiment, the first entity can be determined from the RLC entity and/or MAC entity associated with the PDCP entity based on protocol rule information or network configuration information, providing a more flexible determining method.

In conjunction with the embodiment of the first aspect, in some embodiments, determining the first entity from RLC entity and/or MAC entity associated with the PDCP entity based on the protocol rule information or the network configuration information includes:
determining that the PDCP entity sends first information to the RLC entity and/or MAC entity associated with the PDCP entity, and determining the first entity from the RLC entity and/or MAC entity associated with the PDCP entity;
where the first information indicates triggering of a Buffer Status Report (BSR) and/or a BSR-associated data volume.

In the above embodiment, the timing for determining the first entity from the RLC entity and/or MAC entity associated with the PDCP entity based on the protocol rule information or the network configuration information is clarified, thus improving the determining mechanism.

In conjunction with the embodiment of the first aspect, in some embodiments, the method further includes:
the PDCP entity sending second information to the first entity based on the protocol rule or the network configuration;
where the first entity includes the first type of MAC entity and/or the second type of MAC entity; the second information is configured to indicate triggering of a DSR and/or the a DSR-associated data volume.

In the above embodiment, the manner in which the PDCP entity sends the second information to the first entity is clarified, thus improving the sending mechanism.

In conjunction with the embodiment of the first aspect, in some embodiments, determining the first entity from the RLC entity and/or MAC entity associated with the PDCP entity includes one of:
determining that PDCP packet duplication is activated for a Radio Bearer (RB), and determining the first entity from the RLC entity and/or MAC entity associated with the PDCP entity; where the first entity is the first type of MAC entity and the second type of MAC entity;
determining that a Split Secondary Radio Resource Control RLC entity is configured and the transmitted data volume is greater than or equal to a quantity threshold, and determining the first entity from the RLC entity and/or MAC entity associated with the PDCP entity; where the first entity is the first type of MAC entity and the second type of MAC entity;
determining that a Split Secondary Radio Resource Control RLC entity is configured and the transmitted data volume is less than a quantity threshold, and determining the first entity from the RLC entity and/or MAC entity associated with the PDCP entity, where the first entity is the second type of MAC entity;
determining that the transmitting PDCP entity is associated with the DAPS bearer and has not initiated uplink data handover, and determining the first entity from the RLC entity and/or MAC entity associated with the PDCP entity; where the first entity is the first type of MAC entity;
determining that the transmitting PDCP entity is associated with the DAPS bearer and has initiated uplink data handover, and determining the first entity from the RLC entity and/or MAC entity associated with the PDCP entity, where the first entity is the second type of MAC entity;
determining that PDCP packet duplication is activated for a Radio Bearer (RB), and determining the first entity from the RLC entity and/or MAC entity associated with the PDCP entity; where the first entity is the first type of RLC entity and the second type of RLC entity;
determining that a Split Secondary Radio Resource Control RLC entity is configured and the transmitted data volume is greater than or equal to a quantity threshold, and determining the first entity from the RLC entity and/or MAC entity associated with the PDCP entity, where the first entity is the first type of RLC entity and the second type of RLC entity;
determining that a Split Secondary Radio Resource Control RLC entity is configured and the transmitted data volume is less than a quantity threshold, and determining the first entity from the RLC entity and/or MAC entity associated with the PDCP entity, where the first entity is the first type of RLC entity;
determining that the transmitting PDCP entity is associated with the DAPS bearer and has not initiated uplink data handover, and determining the first entity from the RLC entity and/or MAC entity associated with the PDCP entity; where the first entity is the first type of RLC entity;
determining that the transmitting PDCP entity is associated with the DAPS bearer and has initiated uplink data handover, and determining the first entity from the RLC entity and/or MAC entity associated with the PDCP entity, where the first entity is the second type of RLC entity.

In the above embodiments, the first entity can be determined in different ways under different scenarios, making the determining method more flexible.

In a second aspect, embodiments of the present disclosure provide a terminal, the terminal including:
a processing module configured to:
determine a first entity from a Radio Resource Control (RLC) entity and/or a Media Access Control (MAC) entity associated with a Packet Data Convergence Protocol (PDCP) entity;
where the first entity includes an RLC entity and/or a MAC entity; the first entity is configured to trigger a Delay Status Report (DSR) based on remaining time.

In a third aspect, embodiments of the present disclosure provide a terminal, the terminal including:
a memory including executable instructions; and
one or more processors;
where when the executable instructions are executed by the processor, the terminal is caused to perform the communication method described in the optional implementation of the first aspect.

In a fourth aspect, embodiments of the present disclosure provide a storage medium storing instructions that, when executed on a communication device, cause the communication device to perform the communication method described in the optional implementation of the first aspect.

In a fifth aspect, embodiments of the present disclosure provide a program product that, when executed by a communication device, causes the communication device to perform the communication method described in the optional implementation of the first aspect.

In a sixth aspect, embodiments of the present disclosure provide a computer program that, when executed on a computer, causes the computer to perform the communication method described in the optional implementation of the first aspect.

It is understood that the aforementioned terminal, storage medium, program product, and computer program are all configured to execute the methods provided in the embodiments of the present disclosure. Therefore, the beneficial effects they achieve can be referred to in the beneficial effects of the corresponding method, and will not be repeated here.

The embodiments of the present disclosure provide a method for delay status reporting, a terminal, and a storage medium. In some embodiments, terms such as communication method, information processing method, information transmission method etc. can be used interchangeably.

The embodiments of the present disclosure are not exhaustive, but merely illustrative of some embodiments, and are not intended to limit the scope of protection of the present disclosure. Unless contradictory, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily interchanged. Furthermore, the optional implementations in a certain embodiment can be arbitrarily combined. In addition, the embodiments can be arbitrarily combined. For example, some or all steps of different embodiments can be arbitrarily combined, and a certain embodiment can be arbitrarily combined with the optional implementations of other embodiments.

In the embodiments of the present disclosure, unless otherwise specified or logically conflicting, the terminology and/or descriptions are consistent between the embodiments and can be mutually referenced. Technical features from different embodiments can be combined to form new embodiments based on their inherent logical relationships.

The terminology used in the embodiments of the present disclosure is for the purpose of describing specific embodiments only and is not intended to limit the disclosure.

In the embodiments of the present disclosure, unless otherwise stated, elements expressed in the singular form, such as "a", "an", "the", "said", "described", "the foregoing", "this", etc., can mean "one and only one", or "one or more", "at least one", etc. For example, when using articles such as "a", "an", "the", etc., in translation, the noun following the article can be understood as either a singular or a plural expression.

In the embodiments of the present disclosure, "multiple" refers to two or more.

In some embodiments, terms such as "at least one of", "one or more", "a plurality of", "multiple", etc. can be used interchangeably.

In some embodiments, the notation "at least one of A and B", "A and/or B", "A in one case, B in another", "A in one case. B in another", etc. may, depending on the context, include the following technical solutions: in some embodiments, A (executed regardless of B); in some embodiments, B (executed regardless of A); in some embodiments, execution is selected from A and B (A and B are selectively executed); in some embodiments, both A and B are executed. The same applies when there are more branches such as A, B, and C.

In some embodiments, the notation "A or B" may, depending on the context, include the following technical solutions: in some embodiments, A (executed regardless of B); in some embodiments, B (executed regardless of A); in some embodiments, execution is selected from A and B (A and B are selectively executed). The same applies when there are more branches such as A, B, and C.

The prefixes "first", "second", etc., used in the embodiments of the present disclosure are merely for distinguishing different described objects and do not impose restrictions on the position, order, priority, quantity, or content of the described objects. The description of the described objects is found in the claims or the context of the embodiments, and the use of prefixes should not constitute unnecessary restrictions. For example, if the described object is a "field," the ordinal numbers preceding "field" in "first field" and "second field" do not restrict the position or order of the "fields". "First" and "second" do not restrict whether the "fields" they modify are in the same message, nor do they restrict the order of "first field" and "second field". Similarly, if the described object is a "level", the ordinal numbers preceding "level" in "first level" and "second level" do not restrict the priority between "levels". Furthermore, the number of described objects is not limited by ordinal numbers and can be one or more. For example, in "first device", the number of "devices" can be one or more. Furthermore, the objects modified by different prefixes can be the same or different. For example, if the object being described is "device", then "first device" and "second device" can be the same device or different devices, and their types can be the same or different. Similarly, if the object being described is "information", then "first information" and "second information" can be the same information or different information, and their content can be the same or different.

In some embodiments, "including A", "containing A", "for indicating A" and "carrying A" can be interpreted as directly carrying A or indirectly indicating A.

In some embodiments, terms such as "...", "determining...", "in the case of...", "when...", "if...", etc., can be interchanged.

In some embodiments, terms such as "greater than", "greater than or equal to", "not less than", "more than", "more than or equal to", "not less than", "above", "higher than or equal to", "not lower than" and "above" can be interchanged. Terms such as "smaller than", "smaller than or equal to", "not greater than", "less than", "less than or equal to", "not more than", "lower than", "lower than or equal to", "not higher than" and "below" can be interchanged.

In some embodiments, "device" and the like can be interpreted as physical or virtual, and their names are not limited to those described in the embodiments. Terms such as "device", "equipment", "device", "circuit", "network element", "node", "function", "unit", "section", "system", "network", "chip", "chip system", "entity" and "subject" are interchangeable.

In some embodiments, the "network" can be interpreted as a device included in the network (e.g., an access network device, a core network device, etc.).

In some embodiments, the terms "access network device (AN device)", "radio access network device (RAN device)", "base station (BS)", "radio base station", fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. are interchangeable.

In some embodiments, the terms "tenninal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. can be used interchangeably.

In some embodiments, the access network device, the core network device, or the network device can be replaced with the "terminal". For example, embodiments of the present disclosure can also be applied to structures where communication between access network devices, core network devices, or network devices and terminals is replaced with communication between multiple terminals (e.g., device-to-device (D2D), vehicle-to-everything (V2X), etc.). In this case, the terminal can also be configured to have all or some of the functions of the access network device. Furthermore, terms such as "uplink" and "downlink" can be replaced with terms corresponding to inter-terminal communication (e.g., "side"). For example, uplink channel, downlink channel, etc., can be replaced with side channel, uplink, downlink, etc., can be replaced with side link.

In some embodiments, the terminal can be replaced with an access network device, a core network device, or a network device. In this case, the access network device, the core network device, or the network device can also be configured to have all or some of the functions of the terminal.

In some embodiments, the acquisition of data, information, etc., can comply with the laws and regulations of the country where the user is located.

In some embodiments, data, information, etc., can be acquired after obtaining the user's consent.

Furthermore, each element, row, or column in the tables of the embodiments of the present disclosure can be implemented as an independent embodiment, and any combination of elements, rows, and columns can also be implemented as an independent embodiment.

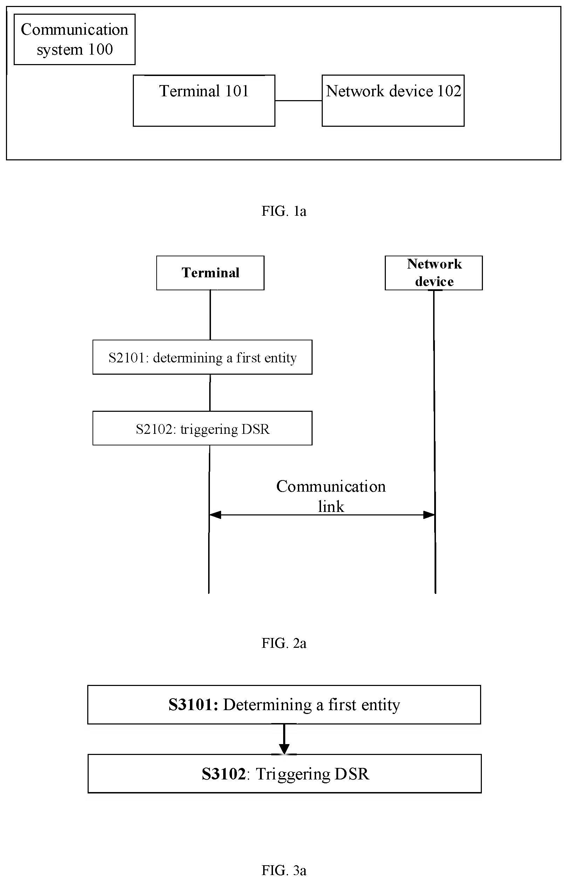

FIG. 1a is a schematic diagram of an architecture of a communication system according to an embodiment of the present disclosure.

As shown in FIG. 1a, the communication system 100 includes a terminal 101 and a network device 102.

In some embodiments, the network device 102 may be an access network device or a core network device.

In some embodiments, the terminal 101 includes, for example, at least one of the following: mobile phone, wearable device, Internet of Things device, car with communication capabilities, smart car, tablet computer, computer with wireless transceiver capabilities, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city, and wireless terminal device in smart home, but is not limited thereto.

In some embodiments, the access network device may be a node or device that connects a terminal to a wireless network. The access network device may include, but is not limited to, at least one of the following: evolved Node B (eNB) in a 5G communication system, next-generation evolved Node B (ng-eNB), next-generation Node B (gNB), node B (NB), home node B (HNB), home evolved node B (HeNB), radio backhaul device, radio network controller (RNC), base station controller (BSC), base transceiver station (BTS), base band unit (BBU), mobile switching center, base station in a 6G communication system, open RAN, cloud RAN, base station in other communication systems, and access node in a Wi-Fi system.

In some embodiments, the technical solutions of the present disclosure are applicable to Open RAN architectures. In this case, the interfaces between or within access network devices involved in the embodiments of the present disclosure can become internal interfaces of Open RAN. The processes and information interactions between these internal interfaces can be implemented through software or programs.

In some embodiments, the access network device can be composed of a central unit (CU) and distributed units (DUs). The CU can also be called a control unit. Using a CU-DU structure can separate the protocol layers of the access network device. Some protocol layer functions are centrally controlled by the CU, while the remaining part or all protocol layer functions are distributed in the DU. The DU is centrally controlled by the CU. However, this is not a limitation.

In some embodiments, the core network device can be a single device, including a first network element, etc., or it can be multiple devices or a group of devices, each including a first network element. The network element can be virtual or physical. The core network includes, for example, at least one of the Evolved Packet Core (EPC), 5G Core Network (5GCN), and Next Generation Core (NGC).

It is understood that the communication system described in the embodiments of the present disclosure is for the purpose of more clearly illustrating the technical solutions of the embodiments of the present disclosure and does not constitute a limitation on the technical solutions provided in the embodiments of the present disclosure. Those skilled in the art will recognize that, with the evolution of system architecture and the emergence of new business scenarios, the technical solutions provided in the embodiments of the present disclosure are also applicable to similar technical problems.

The following embodiments of the present disclosure can be applied to the communication system 100 shown in FIG. 1a, or to some of its components, but are not limited thereto. The components shown in FIG. 1a are illustrative. The communication system may include all or some of the components in FIG. 1a, or other components outside of FIG. 1a. The number and form of each component are arbitrary. The connection relationship between the components is illustrative. The components may be unconnected or connected, and the connection can be in any manner, including direct or indirect connections, wired or wireless connections.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM). CDMA2000, Ultra Mobile Broadband (UMB), IEEE 802.11 (Wi-Fi), IEEE 802.16 (WiMAX), and IEEE 802.20, Ultra-Wideband (UWB), Bluetooth (a registered trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other communication methods, next-generation systems built upon them, etc. Furthermore, multiple systems can be combined (e.g., a combination of LTE or LTE-A with 5G).

In some embodiments, fifth-generation mobile communication technology (5G) has been introduced due to the pursuit of speed, latency, high-speed mobility, energy efficiency, and the increasing diversity and complexity of services in future life. The main application scenarios for 5G are: Enhanced Mobile Broadband (eMBB). Ultra-reliable and Low-Latency Communications (URLLC), and Massive Machine-Type Communication (mMTC). Among these, eMBB still aims to provide users with multimedia content, services, and data, and its demand is growing rapidly. On the other hand, because eMBB may be deployed in different scenarios, such as indoors, urban areas, and rural areas, its capabilities and needs vary considerably, so generalizations cannot be made; a detailed analysis based on the specific deployment scenario is necessary. Typical applications of URLLC include: industrial automation, power automation, remote medical operations (surgery), traffic safety assurance, etc. Typical characteristics of mMTC include high connection density, small data volume, latencyinsensitive services, low module cost, long module lifespan, etc.

In multimodal services, data typically consists of multiple QoS flows, resulting in a very large traffic volume. Multimodal service flows need to meet certain latency requirements during transmission, especially since some data flows need to arrive at the server simultaneously for decoding. Delay in any one data flow will cause the joint decoding of multiple data flows to fail. However, network scheduling is dynamic. Therefore, in some cases, even if some data flows belong to low-priority logical channels, if some data packets have not been scheduled for a long time, a Buffer Status Report (BSR) needs to be sent to notify the network as soon as possible. However, according to relevant mechanisms, a BSR can only be sent when high-priority logical channel data arrives, which cannot meet the needs of emergency scheduling. Therefore, optimization for emergency scheduling in multimodal services needs to be considered.

In some embodiments, a Delay Status Reporting (DSR) is introduced. That is, the terminal can report a DSR, which carries information related to the data transmission delay, such as information that the remaining time of uplink data packets is less than a certain threshold due to prolonged lack of scheduling. The remaining time for a data packet is the time remaining until the packet is discarded. For example, the remaining time can be determined based on a discard timer from the Packet Data Convergence Protocol (PDCP).

In some embodiments, threshold-based DSR reporting is supported. For example, a DSR report is triggered when the remaining delay of a Packet Data Unit (PDU) or a set of PDUs is lower than a networkconfigured threshold. For example, the threshold can be configured at the logical channel group (LCG) granularity.

In some embodiments, the PDCP discard timer for a PDU set supports instances where PDUs in the PDU set arrive at different time.

In some embodiments, the network can configure whether a terminal triggers a delay status report. For example, some thresholds are set for each LCG.

In some embodiments, when a terminal triggers a delay information report for an LCG, the terminal also reports a buffer status associated with the remaining time.

In some embodiments, the Delay Status Report (DSR) procedure is used to provide the serving base station (gNB) with the delay status of uplink (UL) data. The delay status includes the remaining time of UL data and the data volume associated with the reported remaining time. The remaining time is based on the value of its associated PDCP discard timer at the time of the first symbol transferred on the Physical Uplink Shared Channel (PUSCH) sending the DSR.

In some embodiments, Radio Resource Control (RRC) controls DSR operation by configuring the following parameter: remainingTimeThreshold, and remainingTimeThreshold is a threshold for the remaining time of UL data configured to trigger DSR for a Logical Channel Group (LCG).

In some embodiments, the Media Access Control (MAC) entity triggers DSR when the remaining time of a PDU in the LCG (if configured for DSR) becomes shorter than its associated remainingTimeThreshold.

In some embodiments, the MAC entity will trigger DSR reporting if it detects that the remaining time of a data packet is less than the threshold. In scenarios such as packet duplication, split bearer, etc., because one PDCP entity is associated with multiple MAC entities-for example, in a packet duplication scenario, since the PDCP entity corresponds to two MAC entities (the MAC entity associated with the primary RLC entity and the MAC entity associated with the secondary RLC entity)-it is necessary to consider which MAC entity triggers the operation for both the primary and secondary MAC entities.

FIG. 2a is an interactive schematic diagram of a communication method according to an embodiment of the present disclosure. As shown in FIG. 2a, the present disclosure relates to a communication method for a communication system 100, the method including:
Step S2101: The terminal determines a first entity.

In some embodiments, the first entity includes an RLC entity and/or a MAC entity.

In some embodiments, the first entity is determined from a Radio Resource Control (RLC) entity and/or a Media Access Control (MAC) entity associated with the Packet Data Convergence Protocol (PDCP) entity.

In some embodiments, the first entity is configured to trigger a Delay Status Report (DSR) based on the remaining time.

In some embodiments, the remaining time is the duration until the data packet to be transmitted in the logical channel is discarded.

In some embodiments, the remaining time is the duration until the data packet to be transmitted in the logical channel group is discarded.

In some embodiments, the remaining time is the duration until the set of data packets to be transmitted in the logical channel is discarded.

In some embodiments, the remaining time is the duration until the set of data packets to be transmitted in the logical channel group is discarded.

In some embodiments, it is determined that PDCP duplication is activated for a Radio Bearer (RB), the PDCP entity is associated with a first type of RLC entity and/or a second type of RLC entity; the MAC entity associated with the PDCP includes a first type of MAC entity associated with the first type of RLC entity and/or a second type of MAC entity associated with the second type of RLC entity.

In some embodiments, a first type of RLC entity is the primary RLC entity; a second type of RLC entity is an entity other than the primary RLC entity activated by PDCP packet replication.

In some embodiments, it is determined that a split secondary radio resource control (RLC) entity is configured, the PDCP entity is associated with the first type of RLC entity and/or the second type of RLC entity; the MAC entity associated with the PDCP includes a first type of MAC entity associated with the first type of RLC entity and/or a second type of MAC entity associated with the second type of RLC entity.

In some embodiments, the first type of RLC entity is the primary RLC entity; the second type of RLC entity is the secondary RLC entity.

In some embodiments, a transmitting PDCP entity is determined to be associated with a Dual Active Protocol Stack (DAPS) bearer, the PDCP entity is associated with the first type of RLC entity and/or the second type of RLC entity; the MAC entity associated with the PDCP includes a first type of MAC entity associated with the first type of RLC entity and/or a second type of MAC entity associated with the second type of RLC entity.

In some embodiments, the first type of MAC entity is a MAC entity associated with the source cell; the second type of MAC entity is a MAC entity associated with the target cell.

In some embodiments, the first entity is determined from the RLC entity and/or MAC entity associated with the PDCP entity based on protocol rule information.

In some embodiments, the first entity is determined from the RLC entity and/or the MAC entity associated with the PDCP entity based on network configuration information.

In some embodiments, based on protocol rule information, it is determined that the PDCP entity sends first information to the RLC entity and/or MAC entity associated with the PDCP entity, thereby determining the first entity from the RLC entity and/or MAC entity associated with the PDCP entity.

In some embodiments, based on network configuration information, it is determined that the PDCP entity send first information to the RLC entity and/or MAC entity associated with the PDCP entity, and the first entity is determined from the RLC entity and/or MAC entity associated with the PDCP entity.

In some embodiments, the first information indicates triggering of a Buffer Status Report (BSR) and/or a BSR-associated data volume.

In some embodiments, the associated data volume is the data volume corresponding to data packets to be transmitted with an estimated remaining time less than or equal to a time threshold.

In some embodiments, based on protocol rule information, the PDCP entity sends second information to the first entity.

In some embodiments, based on network configuration information, the PDCP entity sends second information to the first entity.

In some embodiments, the first entity includes a first type of MAC entity and/or a second type of MAC entity.

In some embodiments, the second information is configured to indicate triggering of DSR and/or a DSR-associated data volume.

In some embodiments, the PDCP entity sends third information to the first entity based on protocol rule information.

In some embodiments, the PDCP entity sends third information to the first entity based on network configuration information.

In some embodiments, the first entity includes a first type of RLC entity and/or a second type of RLC entity.

In some embodiments, the third information is configured to indicate triggering of a DSR and/or a DSR-associated data volume.

In some embodiments, an RLC entity and/or an MAC entity associated with the PDCP entity are determined based on protocol rule information.

In some embodiments, it is determined that PDCP packet duplication is activated for a radio bearer (RB), and the first entity is determined from the RLC entity and/or MAC entity associated with the PDCP entity; where the first entity is the first type of MAC entity and the second type of MAC entity.

In some embodiments, it is determined that a Split Secondary Radio Resource Control (RLC) entity is configured and the transmitted data volume is greater than or equal to a quantity threshold. The first entity is then determined from an RLC entity and/or an MAC entity associated with the PDCP entity; where the first entity is the first type of MAC entity and the second type of MAC entity.

In some embodiments, it is determined that a Split Secondary Radio Resource Control (RLC) entity is configured and the transmitted data volume is less than a quantity threshold. The first entity is then determined from an RLC entity and/or an MAC entity associated with the PDCP entity; where the first entity is the first type of MAC entity.

In some embodiments, it is determined that a transmitting PDCP entity is associated with a DAPS bearer and has not initiated uplink data handover. The first entity is then determined from an RLC entity and/or an MAC entity associated with the PDCP entity; where the first entity is the first type of MAC entity.

In some embodiments, it is determined that a transmitting PDCP entity is associated with a DAPS bearer and has initiated uplink data handover. The first entity is then determined from an RLC entity and/or an MAC entity associated with the PDCP entity; where the first entity is the second type of MAC entity.

In some embodiments, it is determined that a transmitting PDCP entity is associated with a DAPS bearer and has initiated uplink data handover. The first entity is then determined from an RLC entity and/or an MAC entity associated with the PDCP entity; where the first entity is the second type of MAC entity.

In some embodiments, it is determined that PDCP packet duplication is activated for a Radio Bearer (RB), and the first entity is determined from an RLC entity and/or an MAC entity associated with the PDCP entity; where the first entity is the first type of RLC entity and the second type of RLC entity.

In some embodiments, it is determined that a Split Secondary Radio Resource Control (SARLC) RLC entity is configured and the transmitted data volume is greater than or equal to a quantity threshold, and the first entity is determined from an RLC entity and/or an MAC entity associated with the PDCP entity; where the first entity is the first type of RLC entity and the second type of RLC entity.

In some embodiments, it is determined that a Split Secondary Radio Resource Control (SARLC) RLC entity is configured and the transmitted data volume is less than a quantity threshold, and the first entity is determined from an RLC entity and/or an MAC entity associated with the PDCP entity; where the first entity is the first type of RLC entity.

In some embodiments, it is determined that a transmitting PDCP entity is associated with a DAPS bearer and has not initiated uplink data handover, and the first entity is determined from an RLC entity and/or an MAC entity associated with the PDCP entity; where the first entity is the first type of RLC entity.

In some embodiments, it is determined that the transmitting PDCP entity is associated with a DAPS bearer and has initiated uplink data handover. The first entity is determined from an RLC entity and/or an MAC entity associated with the PDCP entity; where the first entity is the second type of RLC entity.

Step S2102: The terminal triggers DSR.

In some embodiments, the terminal's first entity triggers DSR.

In some embodiments, the terminal's first entity is an entity determined from the Radio Resource Control (RLC) entity and/or the Media Access Control (MAC) entity associated with the Packet Data Convergence Protocol (PDCP) entity.

In some embodiments, the term "information" can be interchanged with terms such as "message", "signal", "signaling", "report", "configuration", "indication", "instruction", "command", "channel", "parameter", "field", "data", etc.

In some embodiments, the term "send" can be interchanged with terms such as "transmit", "report", "transfer", etc.

The information indication method involved in the embodiments of the present disclosure may include at least one of steps S2101 to S2102. For example, step S2101 may be implemented as a standalone embodiment, and step S2102 may be implemented as a standalone embodiment, but is not limited thereto.

FIG. 3a is a schematic flowchart illustrating a communication method according to an embodiment of the present disclosure. As shown in FIG. 3a, the embodiments of the present disclosure relate to a communication method performed by a terminal. The method includes:

Step S3101: Determining a first entity.

In some embodiments, optional implementations of step S3101 can refer to the optional implementations of step S2101 in FIG. 2a and other related parts in the embodiments involved in FIG. 2a, which will not be repeated here.

Step S3102: Triggering DSR.

In some embodiments, optional implementations of step S3102 can refer to the optional implementations of step S2102 in FIG. 2a and other related parts in the embodiments involved in FIG. 2a, which will not be repeated here.

The information indication method involved in the embodiments of the present disclosure may include at least one of steps S3101 to S3102. For example, step S3101 may be implemented as a standalone embodiment, and step S3102 may be implemented as a standalone embodiment, but is not limited thereto.

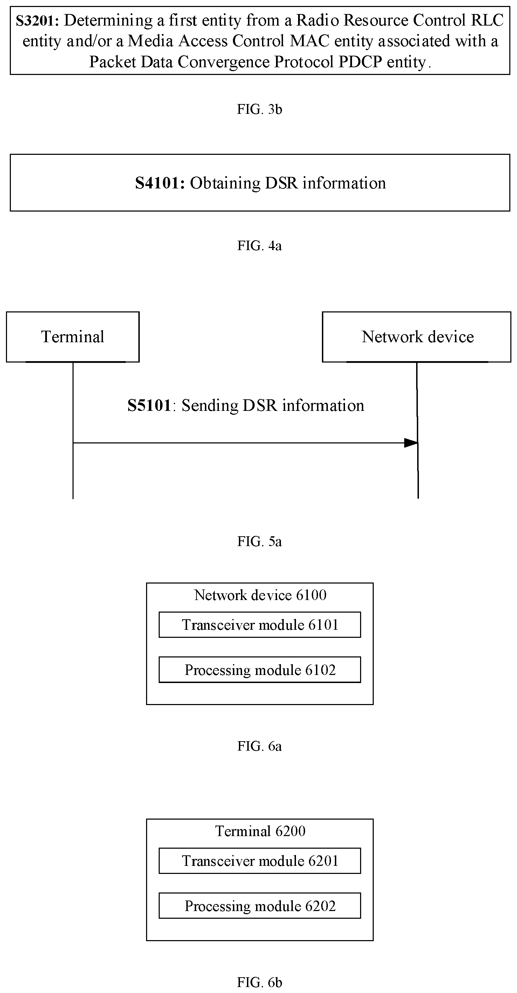

FIG. 3b is a schematic flowchart of a communication method according to an embodiment of the present disclosure. As shown in FIG. 3b, the embodiments of the present disclosure relate to a communication method performed by a terminal, the method including:
Step S3201: Determining a first entity from a Radio Resource Control (RLC) entity and/or a Media Access Control (MAC) entity associated with a Packet Data Convergence Protocol (PDCP) entity.

In some embodiments, the first entity includes an RLC entity and/or a MAC entity; the first entity is configured to trigger a Delay Status Report (DSR) based on remaining time; the remaining time is time until the data packet to be transmitted in the logical channel is discarded.

In some embodiments, optional implementations of step S3201 can be found in the optional implementations of step S2101 in FIG. 2a, and other related parts in the embodiments involved in FIG. 2a, which will not be repeated here.

In some embodiments, the PDCP entity is associated with a first type of RLC entity and/or a second type of RLC entity; the MAC entity associated with the PDCP includes a first type of MAC entity associated with the first type of RLC and/or a second type of MAC entity associated with the second type of RLC entity.

In some embodiments, determining the first entity from the Radio Resource Control (RLC) entity and/or the Media Access Control (MAC) entity associated with the Packet Data Convergence Protocol (PDCP) entity includes:
determining the first entity from the RLC entity and/or the MAC entity associated with the PDCP entity based on protocol rule information or network configuration information.

In some embodiments, determining the first entity from the RLC entity and/or the MAC entity associated with the PDCP entity based on the protocol rule information or the network configuration information includes:
determining that the PDCP entity sends first information to the RLC entity and/or the MAC entity associated with the PDCP entity, and determining the first entity from the RLC entity and/or the MAC entity associated with the PDCP entity;
where the first information indicates triggering of BSR and/or a BSR-associated data volume.

In some embodiments, the method further includes:
the PDCP entity sending second information to the first entity based on protocol rule information or network configuration information;
where the first entity includes the first type of MAC entity and/or the second type of MAC entity; the second information is configured to indicate triggering of DSR and/or a DSR-associated data volume.

In some embodiments, the method further includes:
based on protocol rule information or network configuration information, the PDCP entity sends third information to the first entity;
where the first entity includes the first type of RLC entity and/or the second type of RLC entity; the third information is configured to indicate triggering of DSR and/or a DSR-associated data volume.

In some embodiments, determining the first entity from the RLC entity and/or the MAC entity associated with the PDCP entity includes one of the following:
determining that PDCP packet duplication is activated for a Radio Bearer (RB), and determining the first entity from the RLC entity and/or the MAC entity associated with the PDCP entity; where the first entity is the first type of MAC entity and the second type of MAC entity;
determining that a Split Secondary Radio Resource Control RLC entity is configured and the transmitted data volume is greater than or equal to a quantity threshold, and determining the first entity from the RLC entity and/or the MAC entity associated with the PDCP entity; wherein the first entity is the first type of MAC entity and the second type of MAC entity;
determining that a Split Secondary Radio Resource Control (RLC) entity is configured and the transmitted data volume is less than a quantity threshold, and determining the first entity from the RLC entity and/or the MAC entity associated with the PDCP entity; where the first entity is the first type of MAC entity;
determining that a transmitting PDCP entity is associated with a DAPS bearer and has not initiated uplink data handover, and determining the first entity from the RLC entity and/or the MAC entity associated with the PDCP entity; where the first entity is the first type of MAC entity;
determining that a transmitting PDCP entity is associated with a DAPS bearer and has initiated uplink data handover, determining the first entity from the RLC entity and/or the MAC entity associated with the PDCP entity; where the first entity is the second type of MAC entity;
determining that PDCP packet duplication is activated for a Radio Bearer (RB), and determining the first entity from the RLC entity and/or the MAC entity associated with the PDCP entity; where the first entity is the first type of RLC entity and the second type of RLC entity;
determining that a Split Secondary Radio Resource Control RLC entity is configured and the transmitted data volume is greater than or equal to a quantity threshold, determining the first entity from the RLC entity and/or the MAC entity associated with the PDCP entity; where the first entity is the first type of RLC entity and the second type of RLC entity;
determining that a Split Secondary Radio Resource Control RLC entity is configured and the transmitted data volume is less than a quantity threshold, determining the first entity from the RLC entity and/or the MAC entity associated with the PDCP entity; where the first entity is the first type of RLC entity;
determining that the transmitting PDCP entity is associated with a DAPS bearer and has not initiated uplink data handover, and determining the first entity from the RLC entity and/or MAC entity associated with the PDCP entity; wherein the first entity is the first type of RLC entity;
determining that the transmitting PDCP entity is associated with a DAPS bearer and has initiated uplink data handover, determining the first entity from the RLC entity and/or MAC entity associated with the PDCP entity; wherein the first entity is the second type of RLC entity.

FIG. 4a is a flowchart illustrating a communication method according to an embodiment of the present disclosure. As shown in FIG. 4a, the embodiments of the present disclosure relate to a communication method performed by a network device, the method including:
Step S4101: Obtaining DSR information.

In some embodiments, after the terminal performs DSR, DSR information sent by the terminal is received.

In some embodiments, optional implementations of step S4101 can refer to optional implementations of step S2102 in FIG. 2a, and other related parts in the embodiments involved in FIG. 2a, which will not be repeated here.

FIG. 5a is an interactive schematic diagram of a communication method according to an embodiment of the present disclosure. As shown in FIG. 5a, the embodiments of the present disclosure relate to a communication method for a communication system 100, the method including one of the following steps:
Step S5101: The terminal sends DSR information to the network device.

Optional implementations of step S5101 can refer to optional implementations of steps S2101 to S2102 in FIG. 2a, and other related parts in the embodiments involved in FIG. 2a, which will not be repeated here.

In some embodiments, the above method may include the methods of the embodiments on the communication system side, terminal side, access network device side, core network device side, etc., which will not be repeated here.

In some embodiments, a scheme for Delay Status Report (DSR) is provided when PDCP is associated with multiple Radio Link Control (RLC) entities.

In some embodiments, the terminal detects a specific data packet or set of data packets in a logical channel or logical channel group, the remaining time of the specific data packet or set of data packets is less than a predetermined threshold.

In some embodiments, since the statistics (or calculation) of the remaining time of a data packet are performed at the PDCP layer, when the PDCP detects a specific data packet or set of data packets in a logical channel or logical channel group whose remaining time is less than a predetermined threshold, it will notify the lower-layer entity. For example, the PDCP entity will notify the MAC entity to trigger DSR or the relevant data volume for DSR triggering. Or, because some data packets have already been sent to the RLC entity, the PDCP needs to notify the RLC, the RCL entity performs the triggering of DSR, and then the RLC entity will statistically determine the RLC entity, and then the MAC entity performs DSR.

Here, the PDCP will statistically determine the relevant data volume for some DSR triggers; the RLC will also statistically determine the relevant data volume for some DSR triggers; and the MAC will perform unified DSR reporting settings.

In some embodiments, the association of PDCP with multiple RLC entities and/or MAC entities includes at least one of the following cases:
Case A: Packet duplication scenario, i.e., PDCP packet duplication is activated for the RB. At this point, PDCP will be associated with the first RLC (corresponding to the first type of RLC entity) and the MAC entity (the MAC entity associated with the primary RLC entity, corresponding to the first type of MAC entity); the second RLC (corresponding to the second type of RLC entity) and the MAC entity (the MAC entity associated with an RLC entity other than the primary RLC entity activating PDCP packet duplication, corresponding to the second type of MAC entity).
Case B: Split bearer scenario, i.e., a split secondary RLC entity is configured. At this point, PDCP will be associated with the first RLC (corresponding to the first type of RLC entity) and the MAC entity (the MAC entity associated with the primary RLC entity, corresponding to the first type of MAC entity): the second RLC (corresponding to the second type of RLC entity) and the MAC entity (the MAC entity associated with the split secondary RLC entity, corresponding to the second type of MAC entity).
Case C: DAPS scenario, i.e., the transmitting PDCP entity is associated with the DAPS bearer. At this point, PDCP will be associated with the first RLC (corresponding to the first type of RLC entity) and MAC entity (the MAC entity associated with the source cell, corresponding to the first type of MAC entity): and the second RLC (corresponding to the second type of RLC entity) and MAC entity (the MAC entity associated with the target cell, corresponding to the second type of MAC entity).

In some embodiments, based on protocol agreements or network configuration, the PDCP layer selects the target RLC entity/MAC entity for DSR reporting triggering or the relevant data volume for DSR triggering, i.e., notifies the target entity of the DSR reporting triggering or the relevant data volume for DSR triggering.

In some embodiments, for network configuration scenarios, the network notifies PDCP that when PDCP detects a specific data packet or set of data packets in a logical channel or logical channel group, and the remaining time of the specific data packet or set of data packets is less than a predetermined threshold, the PDCP notifies a specified lower-layer entity (target MAC entity and/or target RLC entity). For example, the PDCP notifies the MAC entity to perform DSR triggering or the relevant data volume for DSR triggering; or the PDCP notifies the target RLC entity of DSR triggering, and then the RLC entity calculates (determines) the relevant data volume for DSR triggering, and then MAC performs DSR.

The specified lower-layer entity, i.e., the target entity notified of the DSR reporting triggering or the relevant data volume for DSR triggering, can be a specified first RLC and/or MAC entity or a specified second RLC or MAC entity. Here, the lower-layer entity can be a lower-layer protocol stack of the protocol stack.

In some embodiments, the target MAC entity can be both a first type of MAC entity and a second type of MAC entity.

In some embodiments, the target RLC entity can be both a first type of RLC entity and a second type of RLC entity.

In some embodiments, when the PDCP indicates triggering of DSR and/or a DSR-associated data volume to the MAC entity, the PDCP layer selects the MAC entity for DSR reporting based on protocol agreements or network configuration.

In some embodiments, the DSR-associated data volume is the amount of data for which the PDCP layer calculates the remaining time of the data packet as less than a threshold.

In some embodiments, the network can be configured so that the PDCP layer indicates triggering of DSR and/or a DSR-associated data volume to the target MAC entity.

In some embodiments, the target MAC entity can be either a first MAC entity or a second MAC entity.

In some embodiments, the target MAC entity can be both a first MAC entity and a second MAC entity.

In some embodiments, according to relevant protocols, the PDCP layer indicates triggering of BSR and/or a BSR-associated data volume to the target MAC entity and/or target RLC entity. The target MAC entity and/or target RLC entity sending the indication of triggering of BSR and/or a BSR-associated data volume can also be the target MAC entity and/or target RLC entity sending the indication of triggering of DSR and/or a DSR-associated data volume.

In some embodiments, according to relevant protocols, the PDCP layer indicates triggering of BSR and/or a BSR-associated data volume to the target MAC entity. The target MAC entity sending the indication of triggering of BSR and/or a BSR-associated data volume can also be the target MAC entity sending the indication of triggering of DSR and/or a DSR-associated data volume. In this case, the RLC entity associated with the target MAC entity indicating triggering of BSR and/or a BSR-associated data volume can also be the target RLC entity sending the indication of triggering of DSR and/or a DSR-associated data volume.

In some embodiments, based on relevant protocols, the PDCP layer sends downlink data to the target MAC entity and/or target RLC entity. The target MAC entity and/or target RLC entity to which downlink data is sent can also serve as the target MAC entity and/or target RLC entity sending the indication of triggering of DSR and/or a DSR-associated data volume.

In some embodiments, in a packet duplication scenario (corresponding to case A above), PDCP will indicate triggering of DSR and/or a DSR-associated data volume to the target MAC entity. In this case, the target MAC entity is an MAC entity associated with the first RLC (e.g., an MAC entity associated with the primary RLC entity) and a MAC entity associated with the second RLC (e.g., an MAC entity associated with an RLC entity other than the primary RLC entity activated for PDCP duplication).

In some embodiments, in a split bearer scenario (corresponding to case B above), if the amount of data to be transmitted is greater than or equal to a threshold (e.g., ul-DataSplitThreshold), the PDCP will indicate triggering of DSR and/or a DSR-associated data volume to the target MAC entity. In this case, the target MAC entity is the MAC entity associated with the first RLC (e.g., the MAC entity associated with the primary RLC entity) and the MAC entity associated with the second RLC (e.g., the MAC entity associated with the split secondary RLC entity). Otherwise, the PDCP will indicate triggering of DSR and/or a DSR-associated data volume to the target MAC entity. In this case, the target MAC entity is the MAC entity that will be associated with the first RLC (e.g., the MAC entity associated with the primary RLC entity).

In some embodiments, under the DAPS scenario (corresponding to case C above), if an uplink data handover has not yet been initiated, the PDCP will indicate triggering of DSR and/or a DSR-associated data volume to the target MAC entity; in this case, the target MAC entity is the MAC entity associated with the first RLC (e.g., the MAC entity associated with the source cell). If an uplink data handover has already been initiated, the PDCP will indicate triggering of DSR and/or a DSR-associated data volume to the target MAC entity; in this case, the target MAC entity is the MAC entity associated with the second RLC (e.g., the MAC entity associated with the target cell).

### Embodiment 1:

If the (sending) PDCP entity is associated with at least two RLC entities, then when indicating triggering of BSR and buffer size calculation to an MAC entity, the (sending) PDCP entity will also determine the MAC entity as the target MAC entity of which triggering of DSR and/or a DSR-associated data volume is notified, and/or the (sending) PDCP entity will also determine the RLC entity associated with the MAC entity as the target RLC entity of which triggering of DSR and/or a DSR-associated data volume is notified.

### Embodiment 2:

If the transmitting PDCP entity is associated with at least two RLC entities, then when indicating triggering of BSR and buffer size calculation, and/or triggering of DSR triggering and buffer size calculation to the MAC entity, the transmitting PDCP entity should do the following:

If PDCP duplication is activated for an RB:
In some embodiments, the PDCP data volume is indicated to the MAC entity associated with the primary RLC entity, and the MAC entity is also indicated whether triggering of DSR and/or the relevant data volume for DSR triggering and/or the delay-critical PDCP data volume are detected;

In some embodiments, the PDCP data volume excluding the PDCP control PDU is indicated to the MAC entity associated with an RLC entity other than the primary RLC entity activated for PDCP duplication, and the MAC entity is indicated whether triggering of DSR and/or the relevant data volume for DSR triggering and/or the delay-critical PDCP data volume are detected;

In some embodiments, triggering of DSR or a relevant data volume for DSR triggering is not indicated to the MAC entity associated with an RLC entity that is disabled (or deactivated) for PDCP duplication, or the PDCP data volume is indicated as 0.

If for RBs, for split bearers:
In some embodiments, if a split secondary RLC entity is configured, and the total amount of data and PDCP data awaiting initial transmission in the primary RLC entity and the split secondary RLC entity is equal to or greater than ul-DataSplitThreshold:
Indicate the PDCP data volume to the MAC entity associated with the primary RLC entity and the MAC entity associated with the split secondary RLC entity, and indicate to the MAC entity whether triggering of DSR and/or the relevant data volume for DSR triggering and/or the delay-critical PDCP data volume are detected;
Indicate the PDCP data volume to the MAC entity associated with RLC entities other than the primary RLC entity and the split secondary RLC entity, the data volume is 0, or do not indicate triggering of DSR and/or the relevant data volume for DSR triggering and/or the delay-critical PDCP data volume to the MAC entity associated with RLC entities disabled for PDCP duplication;
Otherwise (i.e., if the total amount of data equal to or greater than ul-DataSplitThreshold is not satisfied):
   In some embodiments, PDCP data volume is indicated to an MAC entity associated with the primary RLC entity, and the MAC entity is indicated whether triggering of DSR and/or the relevant data volume for DSR triggering and/or the delay-critical PDCP data volume are detected;
   Otherwise, if the transmitting PDCP entity is associated with a DAPS bearer:
      If no uplink data exchange is requested:
      In some embodiments, the PDCP data volume is indicated to an MAC entity associated with the source cell, and the MAC entity is indicated whether triggering of DSR and/or the relevant data volume for DSR triggering and/or the delay-critical PDCP data volume are detected;
      Otherwise (uplink data exchange is requested),
      In some embodiments, the PDCP data volume excluding the PDCP control PDU for the interspersed ROHC feedback associated with the source cell is indicated to an MAC entity associated with the target cell, and the MAC entity is indicated whether triggering of DSR and/or the relevant data volume for DSR triggering and/or the delay-critical PDCP data volume are detected;
      In some embodiments, the PDCP data volume of the PDCP control PDU for the interspersed robust header compression (ROHC) feedback associated with the source cell is indicated to the MAC entity associated with the source cell;
      Otherwise (i.e., scenarios other than packet duplication, split bearer, or DAPS),
      In some embodiments, the PDCP data volume is indicated to an MAC entity associated with the primary RLC entity, and the MAC entity is also indicated whether triggering of DSR and/or the relevant data volume for DSR triggering and/or the delay-critical PDCP data volume are detected;
      In some embodiments, the PDCP data volume is indicated as 0, and indicated to the MAC entity associated with an RLC entity other than the primary RLC entity, or triggering of DSR and/or the relevant data volume for DSR triggering and/or the delay-critical PDCP data volume is not indicated to the MAC entity associated with an RLC entity other than the primary RLC entity.

Note: In Embodiment 2 above, the transmitting PDCP entity determines the MAC entity as the target MAC entity (corresponding to the first entity in the present disclosure) to be notified of triggering of DSR and/or the DSR-associated data volume, and the transmitting PDCP entity simultaneously determines the RLC entity associated with the MAC entity as the target RLC entity (corresponding to the first entity in the present disclosure) to be notified of triggering of DSR and/or the DSR-associated data volume.

The embodiments of the present disclosure also provide a device for implementing any of the above methods. For example, a device is provided that includes units or modules for implementing the steps performed by the terminal in any of the above methods. Another device is also provided, including units or modules for implementing the steps performed by a network device (e.g., an access network device, or a core network device) in any of the above methods.

It should be understood that the division of units or modules in the above device is only a logical functional division. In actual implementation, they can be fully or partially integrated into a single physical entity, or they can be physically separated. Furthermore, the units or modules in the device can be implemented in the form of processor calling software: for example, the device includes a processor connected to a memory, the memory storing instructions, and the processor calling the instructions stored in the memory to implement any of the above methods or to implement the functions of the units or modules of the above device. The processor is, for example, a general-purpose processor, such as a Central Processing Unit (CPU) or a microprocessor, and the memory is internal to the device or external to the device. Alternatively, the units or modules in the device can be implemented in the form of hardware circuits. The functionality of some or all of the units or modules can be achieved through the design of these hardware circuits, which can be understood as one or more processors. For example, in one implementation, the hardware circuit is an application-specific integrated circuit (ASIC). The functionality of some or all of the units or modules is achieved through the design of the logical relationships between the components within the circuit. In another implementation, the hardware circuit can be implemented using a programmable logic device (PLD). Taking a field-programmable gate array (FPGA) as an example, it can include a large number of logic gates. The connection relationships between the logic gates are configured through configuration files, thereby achieving the functionality of some or all of the units or modules. All units or modules of the above device can be implemented entirely through processor-called software, entirely through hardware circuits, or partially through processor-called software with the remaining parts implemented through hardware circuits.

In the embodiments of the present disclosure, the processor is a circuit with signal processing capabilities. In one implementation, the processor can be a circuit with instruction read and execute capabilities, such as a Central Processing Unit (CPU), a microprocessor, a graphics processing unit (GPU) (which can be understood as a type of microprocessor), or a digital signal processor (DSP). In another implementation, the processor can implement certain functions through the logical relationships of hardware circuits. The logical relationships of the aforementioned hardware circuits are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the process of the processor loading instructions to implement the functions of some or all of the above units or modules. In addition, it can also be a hardware circuit designed for artificial intelligence, which can be understood as an ASIC, such as a Neural Network Processing Unit (NPU), a Tensor Processing Unit (TPU), or a Deep Learning Processing Unit (DPU).

FIG. 6a is a schematic diagram of a structure of a network device provided in an embodiment of the present disclosure. As shown in FIG. 6a, the network device 6100 includes: a transceiver module 6101 and a processing module 6102; the transceiver module 6101 is configured to send and receive information; the processing module 6102 is configured to perform operations. In some embodiments, the transceiver module 6101 is configured to perform the steps related to information sending and receiving performed by the network device 6100 in any of the above communication methods, which will not be described in detail here. In some embodiments, the processing module 6102 performs the steps related to information processing performed by the network device in any of the above communication methods, which will not be described in detail here.

FIG. 6b is a schematic diagram of a structure of a terminal provided in an embodiment of the present disclosure. As shown in FIG. 6b, the terminal 6200 includes a transceiver module 6201 and a processing module 6202; the transceiver module 6201 is configured to send and receive information; the processing module 6202 is configured to perform operations. In some embodiments, the transceiver module 6201 is configured to perform the steps related to information sending and receiving performed by the terminal 6200 in any of the above communication methods, which will not be described in detail here. In some embodiments, the processing module 6202 performs the steps related to information processing performed by the terminal in any of the above communication methods, which will not be described in detail here.

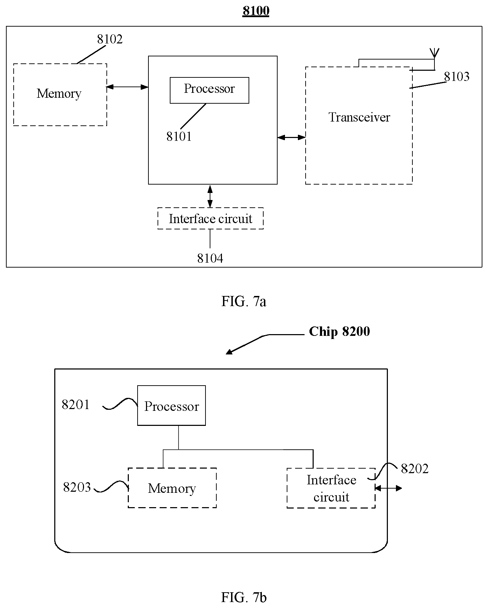

FIG. 7a is a schematic diagram of a structure of a communication device 8100 provided in an embodiment of the present disclosure. The communication device 8100 can be a network device (e.g., an access network device or a core network device, etc.), a terminal (e.g., a user equipment, etc.), a chip, chip system, or processor that supports the network device in implementing any of the above methods, or a chip, chip system, or processor that supports the terminal in implementing any of the above information indication methods. The communication device 8100 can be configured to implement the information indication methods described in the above method embodiments; for details, please refer to the descriptions in the above method embodiments.

As shown in FIG. 7a, the communication device 8100 includes one or more processors 8101. The processor 8101 can be a general-purpose processor or a dedicated processor, such as a baseband processor or a central processing unit (CPU). The baseband processor can be used to process communication protocols and communication data, while the CPU can be configured to control communication devices (e.g., base stations, baseband chips, terminal devices, terminal device chips. DUs or CUs, etc.), execute programs, and process program data. The processor 8101 is configured to invoke instructions to cause the communication device 8100 to perform any of the above communication methods.

In some embodiments, the communication device 8100 further includes one or more memories 8102 for storing instructions. In some embodiments, all or part of the memories 8102 may be located outside the communication device 8100.

In some embodiments, the communication device 8100 further includes one or more transceivers 8103. When the communication device 8100 includes one or more transceivers 8103, the communication steps such as sending and receiving in the above method are performed by the transceiver 8103, and other steps are performed by the processor 8101.

In some embodiments, the transceiver may include a receiver and a transmitter, which may be separate or integrated. In some embodiments, the terms transceiver, transceiver unit, transceiver machine, transceiver circuit, etc., can be used interchangeably; the terms transmitter, transmitting unit, transmitter machine, transmitting circuit, etc., can be used interchangeably: and the terms receiver, receiving unit, receiver machine, receiving circuit, etc., can be used interchangeably.

In some embodiments, the communication device 8100 further includes one or more interface circuits 8104. The interface circuits 8104 are connected to the memory 8102 and can be configured to receive signals from the memory 8102 or other devices, and to send signals to the memory 8102 or other devices. For example, the interface circuit 8104 can read instructions stored in the memory 8102 and send those instructions to the processor 8101.

The communication device 8100 described in the above embodiments can be a network device or a terminal, but the scope of the communication device 8100 described in the present disclosure is not limited thereto, and the structure of the communication device 8100 is not limited to FIG. 7a. The communication device can be a standalone device or part of a larger device. For example, the communication device may be: (1) a standalone integrated circuit (IC), or chip, or chip system or subsystem; (2) a collection of one or more ICs, alternatively including storage components for storing data and programs; (3) an ASIC, such as a modem; (4) a module that can be embedded in other devices; (5) a receiver, terminal device, smart terminal device, cellular phone, wireless device, handheld device, mobile unit, vehicle-mounted device, network device, cloud device, artificial intelligence device, etc.; (6) others, etc.

FIG. 7b is a schematic diagram of a structure of chip 8200 provided in an embodiment of the present disclosure. For cases where the communication device 8100 can be a chip or chip system, please refer to the schematic diagram of the structure of chip 8200 shown in FIG. 7b, but it is not limited thereto.

The chip 8200 includes one or more processors 8201, which are configured to invoke instructions to cause the chip 8200 to execute any of the above communication methods.

In some embodiments, the chip 8200 further includes one or more interface circuits 8202 connected to the memory 8203. The interface circuits 8202 can be configured to receive signals from the memory 8203 or other devices, and can also be configured to send signals to the memory 8203 or other devices. For example, the interface circuit 8202 can read instructions stored in the memory 8203 and send those instructions to the processor 8201. In some embodiments, terms such as interface circuit, interface, transceiver pin, transceiver, etc. can be used interchangeably.

In some embodiments, the chip 8200 further includes one or more memories 8203 for storing instructions. In some embodiments, all or part of the memories 8203 may be located outside of the chip 8200.

The present disclosure also provides a storage medium storing instructions that, when executed on communication device 8100, cause communication device 8100 to perform any of the methods described above. In some embodiments, the storage medium is an electronic storage medium. In some embodiments, the storage medium is a computer-readable storage medium, but it can also be a storage medium readable by other devices. In some embodiments, the storage medium described above can be a non-transitory storage medium, but it can also be a temporary storage medium.

The present disclosure also provides a program product, which, when executed by a communication device 8100, causes the communication device 8100 to perform any of the above communication methods. In some embodiments, the program product is a computer program product.

The present disclosure also provides a computer program, which, when run on a computer, causes the computer to perform any of the above communication methods.

Other embodiments of the present disclosure will readily occur to those skilled in the art upon consideration of the specification and practice of the disclosure disclosed herein. The present disclosure is intended to cover any variations, uses, or adaptations of the disclosure that follow the general principles of the disclosure and include common knowledge or customary techniques in the art not disclosed herein. The specification and embodiments are to be considered exemplary only, and the true scope and spirit of the disclosure are indicated by the following claims.

It should be understood that the disclosure is not limited to the precise structures described above and shown in the drawings, and various modifications and changes can be made without departing from its scope. The scope of the disclosure is limited only by the appended claims.

## Claims

1. A method for delay status reporting, performed by a terminal, comprising:
determining a first entity from a Radio Resource Control RLC entity and/or a Media Access Control MAC entity associated with a Packet Data Convergence Protocol PDCP entity;
wherein the first entity comprises the RLC entity and/or the MAC entity; the first entity is configured to trigger delay status reporting (DSR) based on remaining time.

2. The method according to claim 1, wherein the PDCP entity is associated with a first type of RLC entity and/or a second type of RLC entity; the MAC entity associated with the PDCP comprises a first type of MAC entity associated with the first type of RLC entity and/or a second type of MAC entity associated with the second type of RLC entity.

3. The method according to claim 2, wherein determining the first entity from the Radio Resource Control RLC entity and/or the Media Access Control MAC entity associated with the Packet Data Convergence Protocol PDCP entity comprises:
determining the first entity from the RLC entity and/or the MAC entity associated with the PDCP entity based on protocol rule information or network configuration information.

4. The method according to claim 3, wherein determining the first entity from the RLC entity and/or the MAC entity associated with the PDCP entity based on the protocol rule information or the network configuration information comprises:
determining that the PDCP entity sends first information to the RLC entity and/or the MAC entity associated with the PDCP entity, and determining the first entity from the RLC entity and/or the MAC entity associated with the PDCP entity;
wherein the first information indicates triggering of a Buffer Status Report BSR and/or a BSR-associated data volume.

5. The method according to claim 3, further comprising:
the PDCP entity sending second information to the first entity based on the protocol rule information or the network configuration information;
wherein the first entity comprises the first type of MAC entity and/or the second type of MAC entity; the second information is configured to indicate triggering of the DSR and/or a DSR-associated data volume.

6. The method according to claim 3, further comprising:
based on the protocol rule information or the network configuration information, the PDCP entity sending third information to the first entity;
wherein the first entity comprises the first type of RLC entity and/or the second type of RLC entity; the third information is configured to indicate triggering of the DSR and/or a DSR-associated data volume.

7. The method according to claim 4, wherein determining the first entity from the RLC entity and/or the MAC entity associated with the PDCP entity comprises one of:
determining that PDCP packet duplication is activated for a Radio Bearer RB, and determining the first entity from the RLC entity and/or the MAC entity associated with the PDCP entity; wherein the first entity is the first type of MAC entity and the second type of MAC entity;
determining that a Split Secondary Radio Resource Control RLC entity is configured and a transmitted data volume is greater than or equal to a quantity threshold, and determining the first entity from the RLC entity and/or the MAC entity associated with the PDCP entity; wherein the first entity is the first type of MAC entity and the second type of MAC entity;
determining that a Split Secondary Radio Resource Control RLC entity is configured and a transmitted data volume is less than a quantity threshold, and determining the first entity from the RLC entity and/or the MAC entity associated with the PDCP entity; wherein the first entity is the first type of MAC entity;
determining that a transmitting PDCP entity is associated with a DAPS bearer and has not initiated uplink data handover, and determining the first entity from the RLC entity and/or the MAC entity associated with the PDCP entity; wherein the first entity is the first type of MAC entity;
determining that a transmitting PDCP entity is associated with a DAPS bearer and has initiated uplink data handover, and determining the first entity from the RLC entity and/or the MAC entity associated with the PDCP entity; wherein the first entity is the second type of MAC entity;
determining that PDCP packet duplication is activated for a Radio Bearer RB, and determining the first entity from the RLC entity and/or the MAC entity associated with the PDCP entity; wherein the first entity is the first type of RLC entity and the second type of RLC entity;
determining that a split secondary radio resource control RLC entity is configured and a transmitted data volume is greater than or equal to a quantity threshold, and determining the first entity from the RLC entity and/or the MAC entity associated with the PDCP entity; wherein the first entity is the first type of RLC entity and the second type of RLC entity;
determining that a split secondary radio resource control RLC entity is configured and a transmitted data volume is less than a quantity threshold, and determining the first entity from the RLC entity and/or the MAC entity associated with the PDCP entity; wherein the first entity is the first type of RLC entity;
determining that a transmitting PDCP entity is associated with a DAPS bearer and has not initiated uplink data handover, and determining the first entity from the RLC entity and/or the MAC entity associated with the PDCP entity; wherein the first entity is a first type of RLC entity; or
determining that a transmitting PDCP entity is associated with a DAPS bearer and has initiated uplink data handover, and determining the first entity from the RLC entity and/or the MAC entity associated with the PDCP entity; wherein the first entity is the second type of RLC entity.

8. A terminal, comprising:
a processing module configured to:
determine a first entity from a Radio Resource Control RLC entity and/or a Media Access Control MAC entity associated with a Packet Data Convergence Protocol PDCP entity;
wherein the first entity comprises the RLC entity and/or the MAC entity; the first entity is configured to trigger Delay Status Reporting DSR based on remaining time.

9. A terminal, comprising:
a memory comprising executable instructions;
one or more processors;
wherein, when the executable instructions are executed by the processor, the terminal is caused to perform the method according to any one of claims 1 to 7.

10. A storage medium storing instructions that, when executed on a communication device, cause the communication device to perform the method according to any one of claims 1 to 7.
